# EUROPÄISCHE PATENTANMELDUNG

(11) **EP 4 775 360 A2**
(43) Veröffentlichungstag der Anmeldung: **15.07.2026**
(21) Anmeldenummer: 26165173.1
(22) Anmeldetag: 26.02.2024
(51) Int. Cl.: B25J 15/04

(54) **AUFBEWAHRUNGSBOXEN-MANIPULATOR FÜR BADETHERMEN, HALLENBÄDER, FREIBÄDER, FITNESS-STUDIOS UND UMKLEIDEBEREICHE VON INDUSTRIEBETRIEBEN**

(30) Priorität: 03.04.2023 DE 102023108475
(62) Teilanmeldung aus: 24708984.0
(71) Anmelder: DELTA-X GmbH Ingenieurgesellschaft, 70182 Stuttgart (DE)
(72) Erfinder: Burmeister, Albrecht, 71554 Weissach im Tal (DE); Klas, Walter, 88099 Neukirch (DE)
(74) Vertreter: DREISS Patentanwälte PartG mbB

(57) **Zusammenfassung**

Es wird ein Manipulator für Aufbewahrungsboxen (101) vorgeschlagen. Er ermöglicht den Transport einer Aufbewahrungsbox (101) von einer Umkleidekabine zu einem Lagerplatz und retour.

## Beschreibung

Die Erfindung betrifft den oder die Umkleidebereiche von Thermen, öffentlichen Bädern (Freibäder oder Hallenbäder), gewerbliche Fitness-Studios, aber auch die Umkleidebereiche von Industriebetrieben, in denen die Werker sich vor Beginn ihrer Arbeit umziehen und die Alltagskleidung gegen die Arbeitskleidung tauschen.

Seit vielen Jahrzehnten hat sich in solchen Umkleidebereichen ein System etabliert, das sehr statisch ist, wenig Komfort bietet und viel Platz benötigt: Es gibt Umkleidekabinen in denen sich der Nutzer umzieht. Dabei legt der Nutzer die Alltagskleider ab und zieht beispielsweise eine Badehose, einen Badeanzug, Sportbekleidung oder Arbeitsbekleidung an. Die abgelegte Alltagskleidung wird an einen Bügel gehängt und in einem Schließfach eingeschlossen. Das Schließfach befindet sich nicht in der Umkleidekabine, sondern an einem anderen Ort. Den Schlüssel zu diesem Schließfach nimmt der Nutzer mit.

Wenn der Nutzer die Therme oder den Arbeitsplatz verlassen will, sucht er zunächst das Schließfach auf und entnimmt ihm den Bügel mit den daran hängenden Kleidern. Mit dem Bügel in der Hand geht er in eine freie Umkleidekabine und zieht sich dort um. Dieses System ist wenig nutzerfreundlich, weil der Nutzer bei jedem Umkleidevorgang zwei Orte aufsuchen muss: Die Umkleidekabine und den Ort an dem sich die Schließfächer befinden.

Bei großen Umkleidebereichen führt dies dazu, dass viele Nutzer auf den Fluren und Gängen zwischen den Umkleidekabinen und den Schließfächern unterwegs sind. Dieser "Fußgängerverkehr" erfordert breite Gänge und Flure. D.h. der Platzbedarf ist erheblich. Er erhöht aber auch die Zahl der Kontakte zwischen Nutzern. Diese Kontakte sind unerwünscht, weil sie zur Übertragung von Infektionen, sei es Schnupfen, Grippe oder das Corona-Virus, beitragen.

Aus der JP H07 107718 B2 ist ein Umkleidebereich mit mehreren Umkleidekabinen bekannt, der mehrere Umkleidekabinen umfasst. "Hinter" einer Außenwand der Umkleidekabinen ist ein Hochregallager mit einer Vielzahl von Lagerplätzen für Aufbewahrungsboxen vorhanden. Zwischen dem Hochregallager und den Umkleidekabinen ist ein Zwischenbereich vorgesehen.

Der Transport einer Aufbewahrungsbox von einer Umkleidekabine zu einem freien Lagerplatz in dem Hochregallager erfolgt über ein Förderband in dem Zwischenbereich und ein Regalbediengerät in dem Hochregallager. der Transport einer Aufbewahrungsbox zwischen einem Lagerplatz in dem Hochregallager und einer Umkleidekabine benötigt den Einsatz des Regalbediengeräts und eines Förderbands. Das aus der JP H07 107718 B2 bekannte System benötigt viel Platz. Außerdem ist es sehr komplex und vergleichsweise teuer.

Der Erfindung liegt die Aufgabe zugrunde, eine Vorrichtung bereitzustellen, welche den Transport der Aufbewahrungsboxen zwischen einer Umkleidekabine und einem Lagerplatz in dem Hochregallager einfacher, platzsparender und wirtschaftlicher realisiert.

Diese Aufgabe wird erfindungsgemäß gelöst durch einen Aufbewahrungsboxen-Manipulator, umfassend einen Effektor, wobei der Effektor lösbar mit einer Schnittstelle einer Aufbewahrungsbox verbindbar ist.

Der erfindungsgemäße Aufbewahrungsboxen-Manipulator wird auch als Manipulator für Aufbewahrungsboxen bezeichnet.

Durch den erfindungsgemäßen Effektor ist es möglich, eine Aufbewahrungsbox lösbar mit dem Aufbewahrungsboxen-Manipulator zu verbinden. In diesem Zustand kann die Aufbewahrungsbox aus einer Umkleidekabine entnommen und zu einem freien Lagerplatz bewegt werden. Genauso ist es auch möglich, eine Aufbewahrungsbox, die sich in einem Lagerplatz befindet, zu einer beliebigen Umkleidekabine zu transportieren.

Als Aufbewahrungsboxen-Manipulator können Industrieroboter, z.B. Knickarm-Roboter, eingesetzt werden. Bei einer bevorzugten Ausführung der Erfindung erfolgt die lösbare Verbindung zwischen dem Effektor des Manipulators und der Aufbewahrungsbox mit Hilfe von schaltbaren Magnethalteelementen. Dies bedeutet, dass der Effektor mindestens ein, bevorzugt aber zwei oder mehr schaltbare Magnethalteelemente umfasst, deren Haltebereiche eine Haltefläche des Effektors aufspannen. Die mindestens eine Schnittstelle der Aufbewahrungsboxen ist eine ferromagnetische Gegenfläche, die komplementär zu der Haltefläche des Effektors geformt ist bzw. sind. Dadurch ist es möglich, dass die Haltebereiche des oder der Magnethalteelemente in Anlage an die ferromagnetische Gegenfläche der Aufbewahrungsboxen zu bringen. In diesem Zustand ist es möglich, die schaltbaren Magnethalteelemente zu aktivieren. Dann üben sie eine magnetische Kraft auf die ferromagnetische Gegenfläche aus und in etablieren eine Verbindung zwischen Aufbewahrungsbox und dem Effektor des Aufbewahrungsboxen-Manipulators. Solange die Verbindung besteht, kann die Aufbewahrungsbox mit Hilfe des Aufbewahrungsboxen-Manipulators an einen gewünschten Zielort gebracht werden.

Die Verbindung kann durch eine entsprechende Ansteuerung des oder der Magnethalteelemente gelöst werden. Sie wird immer dann gelöst, wenn sich die Aufbewahrungsbox an dem gewünschten Zielort befindet. Der gewünschte Zielort kann eine Umkleidekabine sein. Er kann aber auch ein Lagerplatz in einem Regalsystem oder einem anderen Lagersystem sein. Das hängt davon ab, ob die Aufbewahrungsbox in einem Lager "zwischengelagert" werden soll, oder ob der Nutzer einer Umkleidekabine "seine Aufbewahrungsbox" in der Umkleidekabine haben möchte. Dann kann der Nutzer vor dem Besuch der Therme sie mit seinen Kleidungsstücken etc. füllen. Nach dem Besuch der Therme oder der sonstigen Einrichtung kann er die in der Aufbewahrungsbox vorhandenen Kleidungsstücke entnehmen und sich wieder anziehen.

Bevorzugt ist es, wenn der Effektor zwei oder sogar mehr Magnethalteelemente aufweist. Dann können größere Haltekräfte übertragen werden und es ergibt sich dadurch eine Redundanz der Halteelemente. Das erhöht die Sicherheit des Systems.

Durch eine geschickte Anordnung der Halteelemente, insbesondere durch einen großen Abstand zwischen den Halteelementen, wird - bei sonst gleichen Randbedingungen - die zwischen dem Effektor und der Aufbewahrungsbox bzw. deren Gegenfläche übertragbare Kraft vergrößert.

Um ein Beispiel zu geben: Wenn die Halteelemente in einem Abstand von beispielsweise 30 cm zueinander angeordnet sind, dann können die bei Schwenkbewegungen oder aufgrund von Kippmomenten auftretenden Kräfte zwischen der Aufbewahrungsbox und dem Effektor besser übertragen werden, als wenn der Abstand nur 10 cm beträgt.

Es ist besonders einfach und auch sehr effektiv, wenn die Haltefläche des Effektors und die mindestens eine Gegenfläche einer Aufbewahrungsbox eben sind. Das erleichtert die Herstellung.

Es kann aber auch sinnvoll sein, wenn die Haltefläche des Effektors und die mindestens eine Gegenfläche nicht als ebene Fläche ausgebildet sind, sondern beispielsweise Vertiefungen bzw. Vorsprünge aufweisen. Dadurch kann zusätzlich zu der magnetischen Verbindung noch eine formschlüssige Verbindung realisiert werden.

Es ist besonders Fall vorteilhaft, wenn die Gegenfläche der Aufbewahrungsbox deutlich größer ist als die von den Haltebereichen der Magnethalteelemente aufgespannte Haltefläche. Wenn beispielsweise die Gegenfläche doppelt so groß ist wie die von den Haltebereichen aufgespannte Haltefläche, dann können gleichzeitig zwei Effektoren mit einer Gegenfläche einer Aufbewahrungsbox verbunden sein. Auf diese Weise kann eine Aufbewahrungsbox, die von einem ersten Aufbewahrungsboxen-Manipulator gehalten wird, an einen zweiten Aufbewahrungsboxen-Manipulator oder eine andere Transport-Einrichtung, die mit einem erfindungsgemäßen Effektor ausgestattet ist, übergeben werden.

Die Übergabe geschieht, indem der Effektor des zweiten Aufbewahrungsboxen-Manipulators in Anlage an einen freien Bereich der Gegenfläche der Aufbewahrungsbox gebracht wird. Dann wird dieser zweite Effektor aktiviert. Sobald diese Verbindung etabliert ist, kann der Effektor des ersten Aufbewahrungsboxen-Manipulators abgeschaltet werden und der erste Manipulator kann sich von der Aufbewahrungsbox wegbewegen. Der nun aktive zweite Aufbewahrungsboxen-Manipulator kann dann die Aufbewahrungsbox entweder direkt an den gewünschten Zielort bringen oder an einen dritten Aufbewahrungsboxen-Manipulator übergeben.

Es ist auch möglich, dass an einer Aufbewahrungsbox zwei oder mehrere Gegenflächen angeordnet sind. Die Gegenflächen sind bevorzugt in verschiedenen Bereichen / an verschiedenen Außenflächen der Aufbewahrungsboxen angeordnet.

Auch dann ist es möglich, die Aufbewahrungsbox von einem ersten Aufbewahrungsboxen-Manipulator an einen weiteren oder mehrere weitere Aufbewahrungsboxen-Manipulatoren zu übergeben. Als zusätzlicher Vorteil ergibt sich, dass die Effektoren aus verschiedenen Richtungen an die Gegenflächen geführt werden können, wenn diese an verschiedenen Außenflächen der Aufbewahrungsboxen angeordnet sind.

Um den sicheren Betrieb des Manipulators zu gewährleisten und eine sichere Verbindung zwischen Effektor und Aufbewahrungsbox zu detektieren, ist es vorteilhaft, wenn der Aufbewahrungsboxen-Manipulator Kontakterkennungsmittel zum Erkennen eines Kontakts zwischen der Haltefläche des Effektors und einer Schnittstelle bzw. einer ferromagnetischen Gegenfläche einer Aufbewahrungsbox umfasst.

Wenn die Kontakterkennungsmittel einen Kontakt zwischen der Haltefläche des Effektors und der Gegenfläche einer Aufbewahrungsbox detektieren, dann ist eine sichere Verbindung zwischen Effektor und Aufbewahrungsbox gewährleistet. Dann kann die Bewegungssteuerung des Aufbewahrungsboxen-Manipulators entriegelt bzw. aktiviert werden und der Aufbewahrungsboxen-Manipulator kann die Aufbewahrungsbox von ihrem derzeitigen "sicheren" Standort, beispielsweise auf einer Ablagefläche im Bereich der Umkleidekabine oder aus einem Lagerplatz entnehmen.

Wenn eine fehlerhafte Verbindung zwischen Effektor und Aufbewahrungsbox nicht erkannt wird, würde die Aufbewahrungsbox herunterfallen, sobald sie den Lagerplatz bzw. die Ablagefläche im Bereich der Umkleidekabine verlässt. Das kann durch die erfindungsgemäßen Kontakterkennungsmittel und die Auswertung von deren Ausgangssignalen in der Steuerung des Manipulators wirksam verhindert werden.

Die Kontakterkennungsmittel können in Form mindestens eines federbelasteten Kontaktstifts realisiert werden. Wenn der oder die federbelasteten Kontaktstifte über die Haltefläche des Effektors hinausragen, dann besteht kein Kontakt zwischen der Haltefläche und einer Gegenfläche einer Aufbewahrungsbox. Wenn die Gegenfläche einer Aufbewahrungsbox an den Halteflächen anliegt, drückt sie den Kontaktstift gegen die Kraft der Feder wo weit zurück, bis dessen Ende in der Haltefläche liegt.

Wenn das Ende bzw. die Enden des oder der federbelasteten Kontaktstifte in der Haltefläche liegen, dann ist dies darauf zurückzuführen, dass die Gegenfläche der Aufbewahrungsbox die federbelasteten Kontaktstifte so weit gegen die Federkraft der Kontaktstifte bewegt hat, dass sich die Enden der Kontaktstifte in der Haltefläche befinden. Diese Position der Kontaktstifte kann man über einfache elektrische Schaltelemente (Taster) ermitteln. Die von dem oder den Kontaktstiften bereitgestellten Statusmeldungen ("Kontaktstift ragt über die Haltefläche hinaus" oder "Ende des Kontaktstifts liegt in der Haltefläche") können in einer Steuerung des Aufbewahrungsboxen-Manipulators ausgewertet werden. So kann zum Beispiel eine Freigabe an die Steuerung des Aufbewahrungsboxen-Manipulators erfolgen.

Es ist auch möglich, anstelle oder zusätzlich zu der Position der Kontaktstifte zur Auswertung bzw. Detektion einer Verbindung zwischen Effektor und Gegenfläche, eine elektrische Kontaktkontrolle vorzunehmen. Dabei wird der Umstand ausgenützt, dass die Gegenfläche aus einem ferromagnetischen und damit elektrisch leitenden Material besteht. Wenn also zwischen zwei Kontaktstiften eine elektrische Spannung anliegt und die Enden dieser federbelasteten Kontaktstifte die Gegenfläche berühren, dann fließt ein Strom zwischen diesen Kontaktstiften. Über die Messung des Stroms kann detektiert werden, ob ein elektrischer Kontakt zwischen den Kontaktstiften und der Gegenfläche besteht oder nicht. Wenn dieser elektrische Kontakt besteht, dann befindet sich die Gegenfläche in der gewünschten Position und die magnetische Verriegelung kann erfolgen. Wenn kein Strom fließt, dann ist der Abstand zwischen der Gegenfläche und den Halteelementen des Effektors zu groß, so dass ein sicheres Verriegeln nicht möglich ist.

Aus Sicherheitsgründen ist es bevorzugt, wenn jedes der Magnethalteelemente einen oder mehrere Permanentmagnete und mindestens einen Elektromagnet umfasst. Bei bestromtem Elektromagnet heben sich die von dem oder den Permanentmagneten und dem mindestens einen Elektromagnet auf die ferromagnetische Gegenfläche einer Aufbewahrungsbox ausgeübten Magnetkräfte mindestens zu 60% auf.

Anders ausgedrückt: Wenn die Magnethalteelemente stromlos sind, dann halten 100% der von dem oder den Permanentmagneten ausgeübten Magnetkräfte die Gegenfläche und mit ihr die Aufbewahrungsbox in Anlage an dem Effektor. Die magnetische Verriegelung bzw. Verbindung ist somit aktiv.

Sobald der mindestens eine Elektromagnet bestromt wird, verringern sich die auf die Gegenfläche wirkenden magnetischen Kräfte. Die Verbindung zwischen Aufbewahrungsbox und Effektor ist damit gelöst. Es ist nicht erforderlich, dass sich die von den Permanentmagneten und den Elektromagneten ausgeübten magnetischen Kräfte zu 100% aufheben. Es reicht aus, wenn sich die Kräfte weitgehend aufheben, um die Verbindung zu lösen.

Der Manipulator kann ein Knickarm-Roboter oder eine andere Bauart eines Industrieroboters sein. Vorteilhaft ist es, wenn der Manipulator verfahrbar ist, so dass er eine Vielzahl von Umkleidekabinen erreichen kann, auch wenn der Arbeitsbereich des Manipulators kleiner ist als der räumliche Abstand zwischen den zu erreichenden Umkleidekabinen bzw. den Lagerplätzen.

Der Manipulator kann auf Schienen oder auf Rädern verfahrbar sein. Wenn der Manipulator auf Rädern über einen Hallenboden verfahren werden kann, dann ist es besonders vorteilhaft, wenn im Hallenboden Induktionsleitungen verlegt sind, so dass der Manipulator über eine induktive Steuerung im Raum verfahrbar ist. Solche induktiven Steuerungen sind aus dem Bereich der Produktionstechnik bekannt. Mit ihrer Hilfe werden in Industriehallen beispielsweise Transportwagen, die mit zu montierenden Komponenten bestückt ist, von einer Ausgabestelle eines Hochregallagers zu dem Arbeitsplatz eines Werkers bewegt. Die Induktionsleitungen sind unsichtbar und vor Beschädigungen geschützt in dem Hallenboden angeordnet.

Selbstverständlich sind auch andere Führungen, wie zum Beispiel eine Kombination aus einer Linearführung und einem Antrieb mittels Zahnstange und einem Ritzel, das von einem Elektromotor angetrieben wird, möglich.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigen:
- Figur 1:: ein Ausführungsbeispiel eines erfindungsgemäßen Manipulators (teilweise);
- Figuren 2 bis 5:: Details einer Schnittstelle eines erfindungsgemäßen Effektors;
- Figur 6:: ein weiteres Ausführungsbeispiel eines erfindungsgemäßen Manipulators;
- Figuren 7 bis 9:: die Einbindung des Manipulators in einen Umkleidebereich mit Regallager.

### Beschreibung der Ausführungsbeispiele

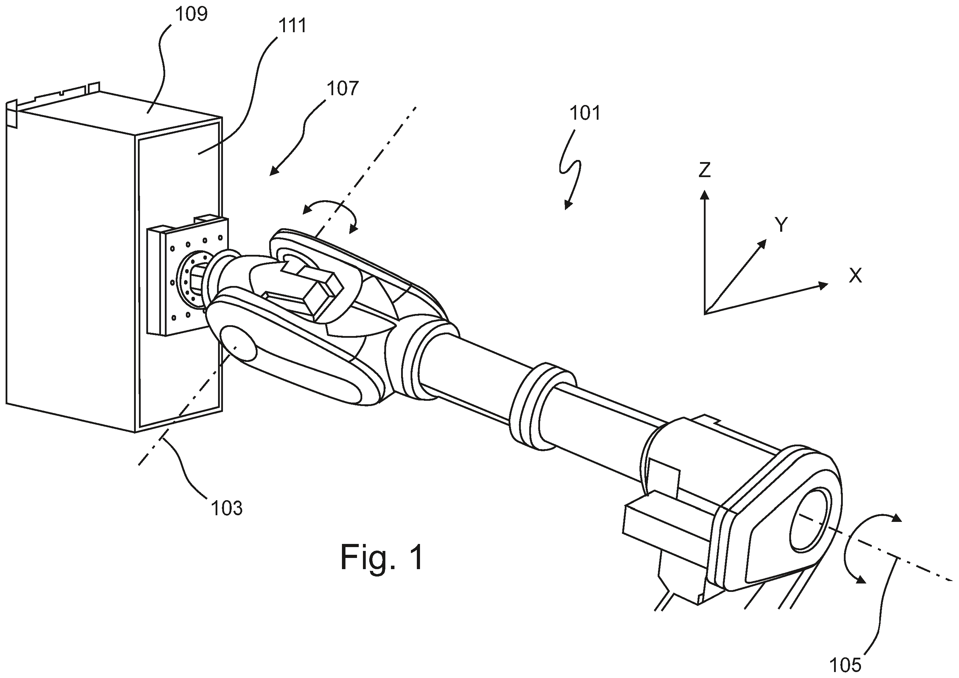

In der Figur 1 ist ein Ausführungsbeispiel eines erfindungsgemäßen Aufbewahrungsboxen-Manipulators 101 dargestellt. Der Aufbewahrungsboxen-Manipulator 101 (nachfolgend als Manipulator bezeichnet) ist bei diesem Ausführungsbeispiel ein aus der Automatisierungstechnik bekannter Knickarm-Roboter, der mehrere Bewegungsachsen aufweist.

Der untere Teil bzw. das hintere Ende des Knickarm-Roboters ist in der Figur 1 nicht dargestellt, da die Erfindung nicht die konstruktive Ausführung des Knickarm-Roboters betrifft und solche Knickarm-Roboter dem Fachmann bekannt sind.

In der Figur 1 sind drei lineare Bewegungsachsen in drei Raumrichtungen durch ein Koordinatensystem mit den Koordinaten-Achsen "X", "Y" und "Z" angedeutet. Ebenso sind zwei Drehachsen 103 und 105 angedeutet. Der Manipulator muss nicht notwendiger Weise drei lineare Bewegungsachsen und zwei Drehachsen 103 und 105 haben.

Mit Hilfe dieser Bewegungsachsen kann ein Effektor 107, der an dem Manipulator 101 angebracht ist, und mit ihm eine daran befestigte Aufbewahrungsbox 109 aus einem Lagerplatz (nicht dargestellt) entnommen und an einen anderen Lagerplatz oder zu einer Umkleidekabine (nicht dargestellt) transportiert und dort abgesetzt werden. Selbstverständlich ist auch der umgekehrte Vorgang möglich, nämlich, dass mit Hilfe des Manipulators 101 eine Aufbewahrungsbox 109, die sich in einer Umkleidekabine befindet, von dem Manipulator 101 an einen ihr zugedachten Lagerplatz gebracht wird.

Die Aufbewahrungsbox 109 dient als Behälter für Kleidungsstücke und sonstige Utensilien, welche die Nutzerin/der Nutzer einer Umkleidekabine ablegen und während des Besuchs einer Therme oder eines Bads vor dem Zugriff dritter Personen geschützt sicher aufbewahren möchte.

Die Aufbewahrungsbox 109 kann beispielsweise als quaderförmiges Gehäuse ausgebildet sein, mit einem Deckel, der von dem Nutzer geöffnet und geschlossen werden kann.

Die Aufbewahrungsbox 109 weist eine Gegenfläche 111 auf, die aus einem ferromagnetischen Material besteht.

Die Gegenfläche 111 kann beispielsweise ein Stahlblech sein. Sie kann, wie hier dargestellt, als ebenes Blech ausgeführt sein. Es ist aber auch möglich, die Gegenfläche 111 als abgewinkeltes L- oder U-förmiges Blech auszubilden, so dass sie sich über zwei oder drei Seiten der Aufbewahrungsbox 109 erstreckt.

Die Gegenfläche 111 ist die Schnittstelle der Aufbewahrungsbox 109, welche zusammen mit dem Effektor 107 eine lösbare Verbindung zwischen dem Manipulator 101 und der Aufbewahrungsbox 109 ermöglicht.

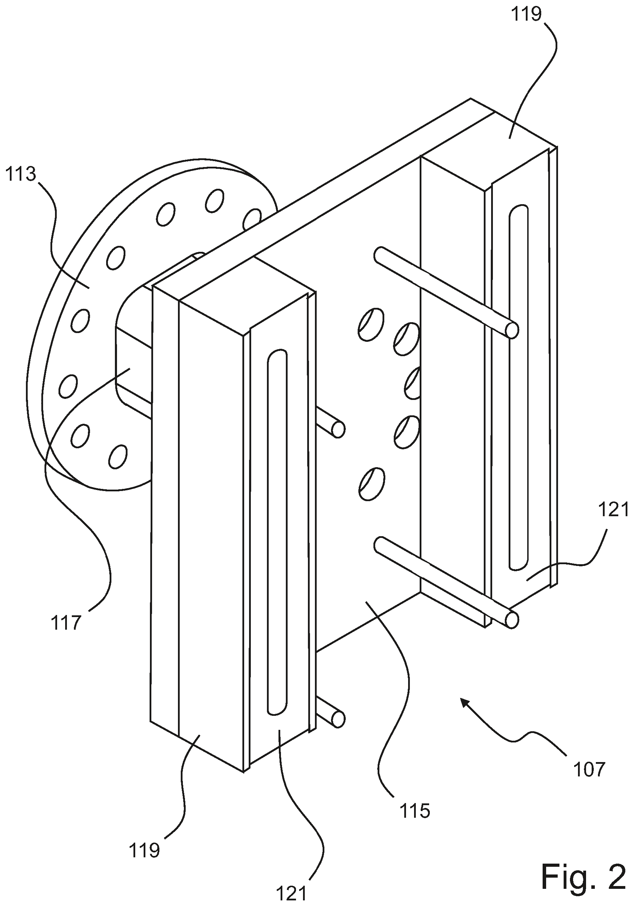

Nachfolgend werden anhand der Figuren 2 bis 5 Aufbau und Funktionsweise des Effektors 107 näher erläutert. Der Effektor 107 umfasst eine Flanschplatte 113. Über die Flanschplatte 113 wird der Effektor 107 mit dem "vorderen" Ende des Manipulators 101 bzw. eines auf dem Markt verfügbaren Knickarm-Roboters oder eines ähnlichen Industrieroboters verschraubt.

Die Flanschplatte 113 umfasst mehrere Befestigungsbohrungen (ohne Bezugszeichen), deren Lochkreisdurchmesser auf das Ende des bzw. die Schnittstelle des Manipulators 101 abgestimmt ist.

Des Weiteren umfasst der Effektor 107 eine Platte 115. Die Platte 115 und die Flanschplatte 113 sind über ein optionales Distanzstück 117 miteinander verbunden. Das Distanzstück 117 kann als Vierkantrohr ausgeführt sein.

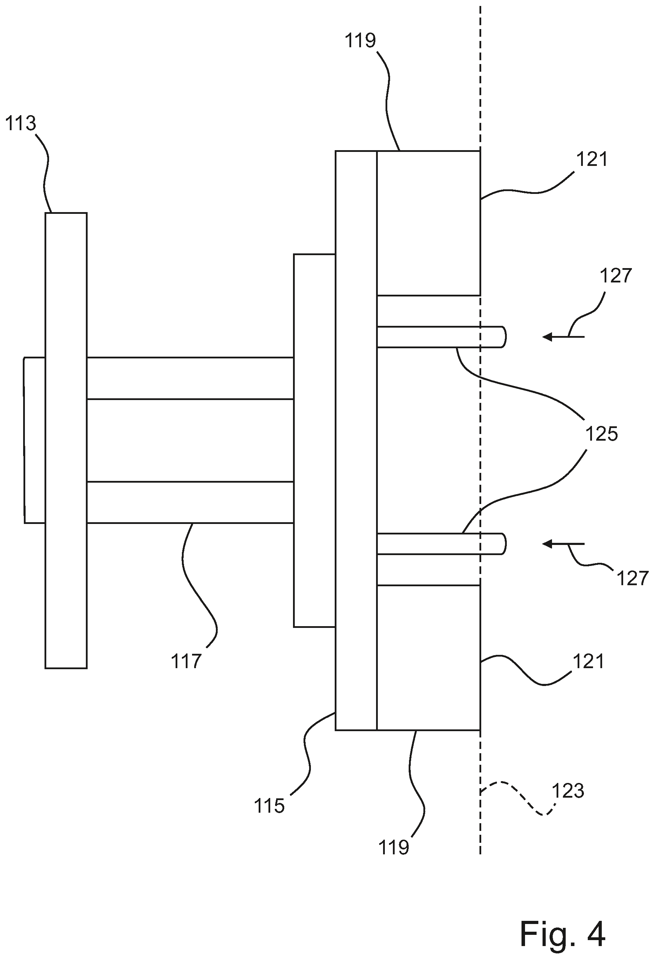

An der Platte 115 sind bei diesem Ausführungsbeispiel zwei Magnethalteelemente 119 angeordnet. Die Magnethalteelemente 119 haben Haltebereiche 121, die bei diesem Ausführungsbeispiel in einer Ebene liegen. Diese Ebene wird auch als Haltefläche des Effektors bezeichnet. Bei diesem Ausführungsbeispiel verläuft die Haltefläche des Effektors 107 parallel zu der Platte 115. Die Haltefläche ist in der Figur 4 mit dem Bezugszeichen 123 bezeichnet.

Der Effektor 107 weist zusätzlich noch optionale Kontakterkennungsmittel auf. Diese Kontakterkennungsmittel erhöhen die Betriebssicherheit des erfindungsgemäßen Aufbewahrungsboxen-Manipulators 101. Sie detektieren, ob sich die Haltebereiche 121 des Effektors 107 in Anlage an der Gegenfläche 111 der Aufbewahrungsbox 109 befinden. Nur dann entsteht eine ausreichend belastbare Verbindung zwischen Manipulator 101 und Aufbewahrungsbox 109, wenn die Magnethaltelemente 119 aktiviert werden.

Die Kontakterkennungsmittel sind bei diesem Ausführungsbeispiel federbelastete Kontaktstifte 125. Wie aus den Figuren 2 und 4 ersichtlich, ragen die Enden der Kontaktstifte in dem dargestellten Zustand über die Haltefläche 123 des Effektors bzw. die Haltebereiche 121 der Magnethalteelemente 119 hinaus.

Wenn nun, wie in der Figur 1 erkennbar, der Effektor 107 in Anlage an die Gegenfläche 111 einer Aufbewahrungsbox 109 gebracht wird, drückt die Gegenfläche 11 die Kontaktstifte 125 so weit zurück, bis sich die Enden der Kontaktstifte 125 in der Haltefläche 123 des Effektors 107 (siehe Figur 4) befinden.

Dadurch kann detektiert werden, ob sich der Effektor 107 in Anlage an der Gegenfläche 111 befindet. Die Kontakterkennungsmittel können einfache Taster sein.

Die Funktionsweise der Kontaktstifte bzw. der Kontakterkennungsmittel wird nachfolgend im Zusammenhang mit der Figur 4 noch näher erläutert.

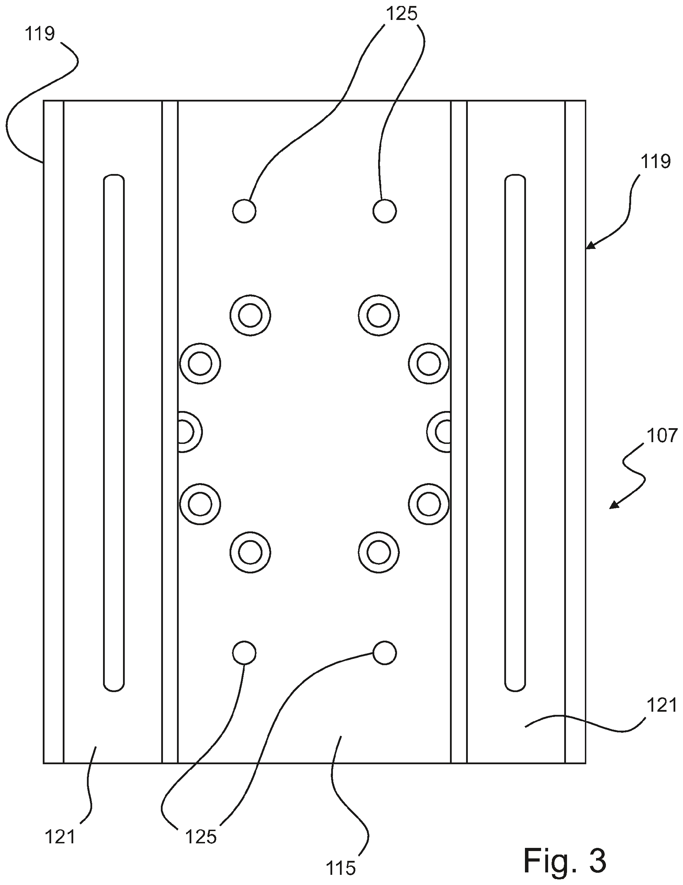

Die Figur 3 stellt eine Ansicht von vorne auf den Effektor 107 dar. In der Platte 115 sind mehrere Durchgangsbohrungen (ohne Bezugszeichen) vorhanden. Die Durchgangsbohrungen haben dasselbe Bohrbild wie die Befestigungsbohrungen der Flanschplatte 113. Dadurch ist es möglich, die Schraubenköpfe (nicht dargestellt) der Befestigungsschrauben zu erreichen, die zum Befestigen der Flanschplatte 113 an dem Manipulator 101 dienen.

Die Figur 4 zeigt eine Seitenansicht auf den Effektor 107. In der Figur 4 ist die Haltefläche 123 durch eine unterbrochene Linie angedeutet. Die Haltefläche 123 wird durch die Haltebereiche 121 der Magnethalteelemente 119 aufgespannt.

Bei dem hier dargestellten Ausführungsbeispiel liegen die Haltebereiche 102 der beiden Magnethalteelemente 119 in einer Ebene. Die Haltefläche 123 des Effektors 107 liegt in dieser Ebene.

Es ist selbstverständlich auch möglich und denkbar, dass die Haltebereiche 121 der Magnethalteelemente 119 nicht in einer Ebene, sondern beispielsweise parallel zueinander versetzt oder sogar in einem bestimmten Winkel zueinander angeordnet sind. Dann würde die Haltefläche 123 eine treppenartige Geometrie bzw. eine abgewinkelte Geometrie aufweisen und aus zwei oder mehr Teilstücken bestehen.

In dem in der Figur 4 dargestellten Zustand, bei dem sich der Effektor nicht in Kontakt mit einer Gegenfläche 111 einer Aufbewahrungsbox befindet, ragen die Enden der Kontaktstifte 125 über die Haltefläche 123 hinaus.

Wenn der Effektor 107 in Kontakt mit einer Gegenfläche 111 einer Aufbewahrungsbox gelangt, dann drückt die Gegenfläche 111 die Enden der Kontaktstifte 125 so weit zurück, bis diese sich in der Haltefläche 123 befinden.

Diese Bewegung ist in der Figur 4 durch Pfeile 127 angedeutet. Die Kontaktstifte 125 können als einfache Taster ausgebildet sein, die zum Beispiel in der Figur 4 dargestellten Position geöffnet sind und schließen, sobald sich die Enden der Kontaktstifte 125 in der Haltefläche 123 befinden.

Es ist auch möglich, dass zwischen zwei Kontaktstiften 125 eine elektrische Spannung anliegt. In der in Figur 4 dargestellten Position würde wegen des großen Abstands zwischen den Kontaktstiften 125 kein Strom zwischen den Kontaktstiften 125 fließen (I = null). Wenn sich die Kontaktstifte jedoch in Anlage an einer ferromagnetischen Gegenfläche 111 befinden, dann schließt die Gegenfläche 111 den Stromkreis zwischen den Kontaktstiften 125 mit verschiedener Polarität.

Aus dem Stromfluss (I > 0), der sich dann einstellt, kann detektiert werden, dass sich der Effektor 107 in Anlage an einer ferromagnetischen Gegenfläche 111 befindet.

### Selbstverständlich können auch andere

Kontaktdetektionsmittel eingesetzt werden, um den Kontakt zwischen Gegenfläche 111 und Effektor 107 zu detektieren.

Die Magnethalteelemente 101 funktionieren bevorzugt wie folgt:
Die Magnethalteelemente 101 umfassen mindestens einen Permanentmagnet. Die Permanentmagnete sind so dimensioniert, dass sie eine beladene Aufbewahrungsbox 109 tragen können.

Außerdem umfasst jede Magnethalteelement 101 noch mindestens einen Elektromagneten. Wenn der Elektromagnet bestromt wird, dann heben sich die magnetischen Kräfte des Permanentmagneten und des oder der Elektromagneten weitestgehend auf, so dass die resultierende Magnetkraft gegen Null geht. Dadurch wird die Verbindung zwischen der Aufbewahrungsbox 109 und dem Manipulator 101 gelöst.

Wenn man die Figur 1 betrachtet geht, wird deutlich, dass die Gegenfläche 111 mehr als doppelt so groß ist wie die Platte 115 des Effektors 107 bzw. die von den Haltebereichen 121 der Magnethalteelemente 119 aufgespannte Fläche.

Die Übergabe einer Aufbewahrungsbox 109 von einem ersten Manipulator 101 an einen zweiten Manipulator 101 kann wie folgt von statten gehen:
Die Größe der Gegenfläche 111 erlaubt es, beispielsweise oberhalb des in der Figur 1 dargestellten (ersten) Effektors 107 einen (nicht dargestellten Effektor) eines zweiten Manipulators 105 zu positionieren und diesen zweiten Effektor 107 zu aktivieren, so dass die Aufbewahrungsbox 109 für eine kurze Zeit von zwei Manipulatoren 101 gehalten wird.

Sobald sichergestellt ist, dass die Verbindung zwischen dem zweiten Effektor 107 und der Aufbewahrungsbox etabliert ist, wird der erste Manipulator deaktiviert. Dadurch wird die Verbindung zwischen dem ersten Manipulator und der Aufbewahrungsbox 109 gelöst. Danach trägt nur noch der zweite Manipulator 109 die Aufbewahrungsbox 109.

Es ist somit möglich, die Aufbewahrungsbox 109 sicher von einem Manipulator bzw. von einem Effektor 107 an einen anderen Effektor 107 zu übergeben. Das erweitert die Handlungsoptionen des erfindungsgemäßen Manipulators 101 und der zugehörigen Aufbewahrungsbox deutlich.

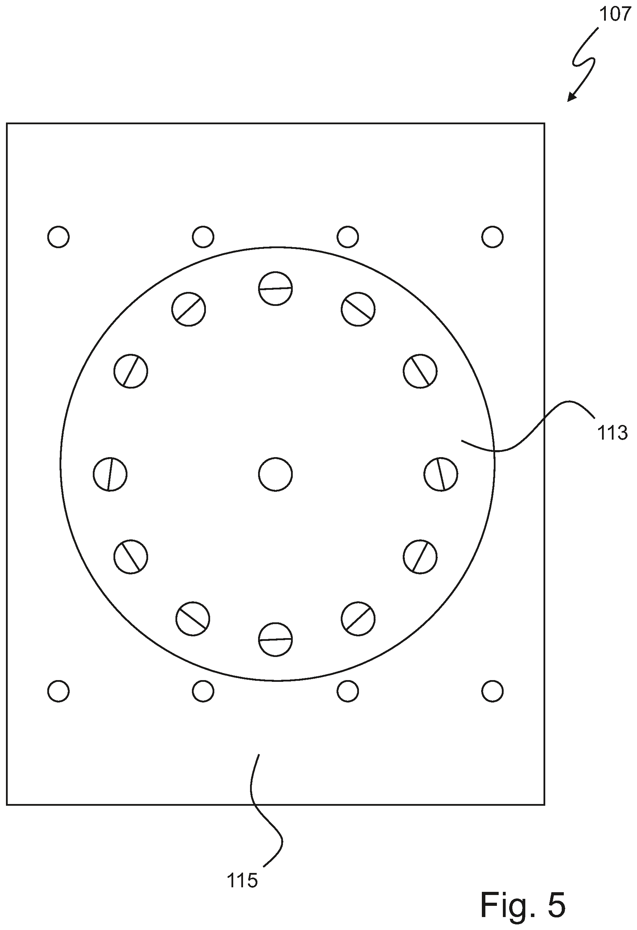

Die Figur 5 zeigt eine Absicht von hinten auf den Effektor 107.

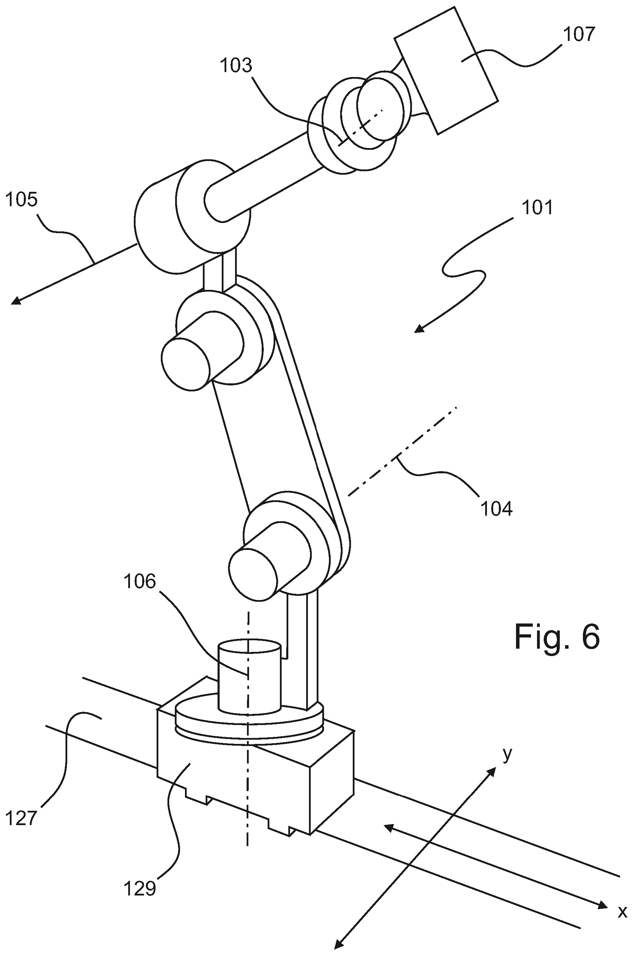

In der Figur 6 ist ein Ausführungsbeispiel eines erfindungsgemäßen Manipulators 101 mit einem nur schematisch dargestellten Effektor 107 dargestellt. Der Manipulator 101 verfügt über vier Drehachsen 103, 105, 104 und 106. Außerdem ist der Manipulator 101 in Richtung der X-Achse linear verfahrbar.

Lediglich angedeutet ist eine Schiene 127, auf welcher ein Basisteil 129 des Manipulators 101 verfahrbar geführt ist. Durch eine Ansteuerung der Drehachsen 103 bis 106 und die Linearachse in Richtung der Y-Achse, kann der Effektor 107 innerhalb seines Arbeitsbereichs eine Vielzahl von Positionen und Ausrichtungen einnehmen. kann Er kann daher mit der Haltefläche des Effektors 107 an die Gegenflächen 111 einer nicht dargestellten Aufbewahrungsbox 109 bewegt werden. Anschließend werden die Halteelemente 119 aktiviert und die Verbindung zwischen dem Effektor 107 und der Aufbewahrungsbox 109 hergestellt, so dass die Aufbewahrungsbox mit Hilfe des Manipulators 101 an den gewünschten Ort gebracht und dort abgestellt werden kann. Danach wird die Verbindung zwischen Effektor 107 und Aufbewahrungsbox 109 wieder gelöst.

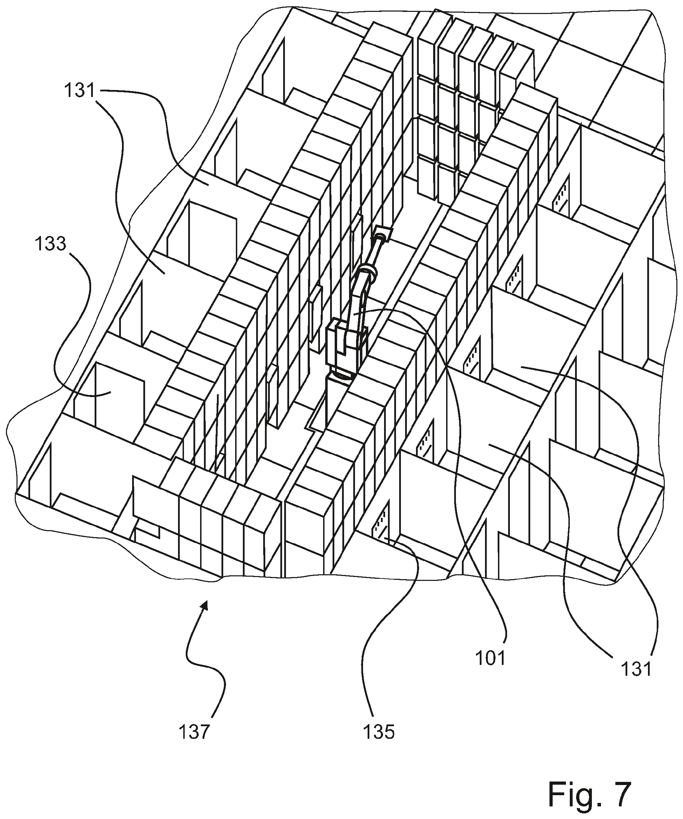

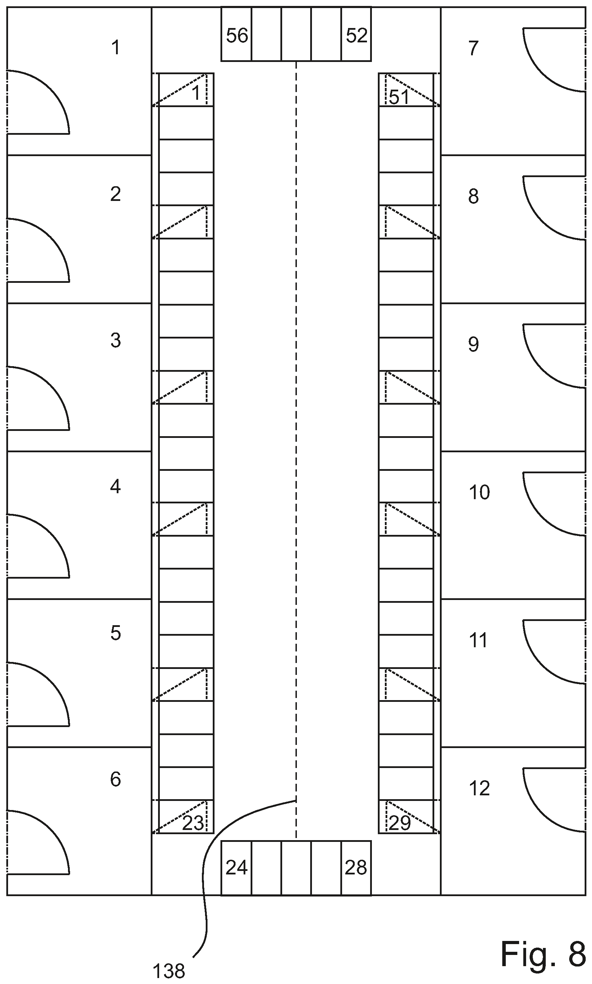

Diese Vorgehensweise wird im Zusammenhang mit den Figuren 7 und 8 noch etwas näher erläutert. Die Umkleidekabinen haben die Bezugszeichen 131. Aus Gründen der Übersichtlichkeit ist nur jeweils eine und nur wenige Umkleidekabinen mit dem Bezugszeichen 131 versehen worden. In der in Figur 7 linken Reihe von Umkleidekabinen 131 sind die Türen 135 und 133 geöffnet dargestellt. An den Türen 133 gegenüberliegenden Wand (siehe die rechte Reihe der Umkleidekabinen 131 in Figur 7) ist eine Öffnung 135 ausgespart. Diese Öffnung 135 kann mit einer Klappe oder mit einem Schieber verschlossen sein bzw. bei Bedarf geöffnet werden. Bei der erfindungsgemäßen Umkleidekabine befindet sich hinter der Wand mit der Öffnung 135 ein Regallager 137.

Das Regallager 137 ist in einer Draufsicht von oben (siehe Figur 8) rechteckig ausgebildet. Es umfasst sechsundfünfzig Lagerplätze in einer Ebene. Die Lagerplätze befinden sich bei diesem Ausführungsbeispiel zu beiden Seiten der Längsachse 138 einer Gasse innerhalb derer sich der Manipulator 101 bewegt. Diese Lagerplätze haben die Nummern 1 bis 23 sowie 29 bis 51. Zusätzlich können an den Enden der Gasser weitere (optionale) Lagerplätze vorhanden sein. Sie haben in der Figur 8 die Nummern 24 bis 28 sowie 52 bis 56.

Über die Länge der Gasse und die Breite der Gasse kann die Zahl der in einer Ebene vorhandenen Lagerplätze an den Bedarf angepasst werden. Bei dem in Figur 7 dargestellten Ausführungsbeispiel sind Lagerplätze in vier Ebenen übereinander angeordnet. In Summe stehen somit in dem Regallager 137 über zweihundert Lagerplätze für Aufbewahrungsboxen 107 zur Verfügung.

Im Inneren des Regallagers 137 befindet sich der Manipulator 101. Er ist in Richtung der Längsachse 138 (siehe Figur 8) verfahrbar. In der Figur 8 ist der Manipulator 101 nicht dargestellt. Am Boden des Lagers kann z.B. eine Schiene 127 montiert sein, auf der der Manipulator 101 hin und her bewegbar ist.

Der Manipulator 101 kann jeden Lagerplatz des Regallagers 137 erreichen. Mit Hilfe des Effektors 107 kann er eine Aufbewahrungsbox, die in einem der Lagerplätze abgestellt ist, entnehmen und in die verbinden. Dies geschieht in der oben im Zusammenhang mit den Figuren 1 bis 5 beschriebenen Art und Weise. Wenn diese Verbindung besteht, kann der Manipulator die Aufbewahrungsbox beispielsweise aus einem Lagerplatz entnehmen und in die Nähe einer gewünschten Umkleidekabine bringen.

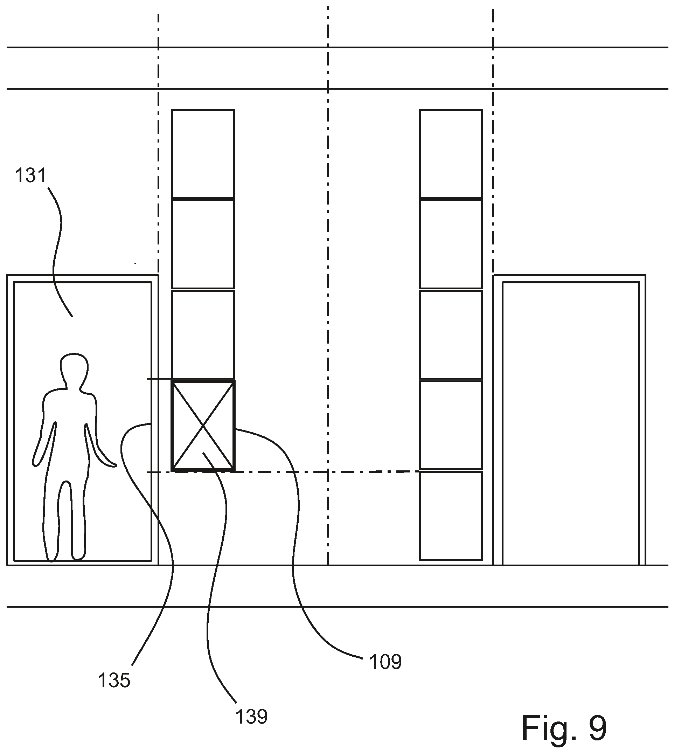

Um diesen Vorgang zu veranschaulichen, ist in der Figur 9 ein Schnitt durch den Umkleidebereich gemäß der Figuren 7 und 8 dargestellt. In der Figur 9 ist die Öffnung 135 in der Wand einer Umkleidekabine 131 zu erkennen. Wenn an dem der direkt dahinterliegenden Öffnung 135 befindlichen Lagerplatz LP 139 eine Aufbewahrungsbox von dem Manipulator (nicht dargestellt in der Figur 9) abgestellt wird, dann kann der Nutzer der Umkleidekabine 131 zu Beginn seines Besuchs, nachdem er sich umgezogen hat, seine Kleidungsstücke und persönlichen Gegenstände in der Aufbewahrungsbox 107, die sich an dem Lagerplatz 139 befindet, ablegen. Sobald der Nutzer Umkleidekabine verlassen will, kann er ein Signal geben, dass die Aufbewahrungsbox entfernt werden kann. Dieses Signal kann auch automatische generiert werden, wenn der Nutzer die Umkleidekabine 131 verlässt.

Dann fährt der Manipulator 101 mit seinem Effektor 107 an die Gegenfläche 111 der am Lagerplatz 139 befindlichen Aufbewahrungsbox 109, stellt die Verbindung her und entnimmt die Aufbewahrungsbox 109 aus dem Lagerplatz 139. Anschließend stellt er die Aufbewahrungsbox in einem beliebigen anderen Lagerplatz des Hochregallagers 137 ab. Dann kann der nächste Nutzer die Umkleidekabine 131 betreten.

Wenn dieser Nutzer die Therme soeben erst betreten hat, wird ihm eine leere Aufbewahrungsbox 109 in den Lagerplatz 139 gestellt, so dass er sich umziehen kann.

Wenn der nächste Benutzer den Besuch schon in der Therme oder dem Bad oder dem Arbeitsbereich beenden will, dann lässt er sich die mit seinen Utensilien gefüllte Aufbewahrungsbox 109, die sich an einem beliebigen Lagerplatz des Regallagers 137 befindet, in den Lagerplatz 139 bringen. Dort angekommen, öffnet der Nutzer die Aufbewahrungsbox 109, entnimmt er ihr seine Utensilien und kann sich wieder anziehen.

Die gleichen Vorgänge erfolgt analogerweise auch in den anderen Umkleidekabinen, die in der Figur 8 von 1 bis 12 durchnummeriert sind.

Dadurch ist es möglich, dass sich mehrere hundert Benutzer zwölf Umkleidekabinen "teilen", wobei die Nutzer die Umkleidekabinen selbstverständlich nacheinander nutzen.

Jedem Nutzer wird zu Beginn seines/ihres Besuchs eine leere Aufbewahrungsbox 109 zur Verfügung gestellt und zwar genau in dem Lagerplatz, der sich hinter der Öffnung 135 in der Umkleidekabine des Benutzers befindet. Anschließend kann der Nutzer sich umziehen, seine Utensilien in die Aufbewahrungsbox 109 zwischenlagern. Nach dem Verlassen der Umkleidekabine wird die Aufbewahrungsbox 109 im Regallager zwischengelagert.

Wenn der Nutzer seinen Besuch beendet hat, betritt er irgendeine der Umkleidekabinen 1 bis 12. Die mit seinen Utensilien gefüllte Aufbewahrungsbox wird daraufhin aus dem Regallager 135 entnommen und in den Lagerplatz gebracht, der sich hinter der Öffnung 135 der Umkleidekabine des Nutzers befindet.

Die Gasse in der sich der Manipulator bewegt ist für das Publikum nicht zugänglich; es hält sich während des Betriebs niemand dort auf, so dass von dem Manipulator 101 keine Gefahr für das Publikum oder die Beschäftigten ausgeht.

### Bezugszeichenliste

101 Aufbewahrungsboxen-Manipulator
103 bis 106 Drehachsen des Manipulators
107 Effektor
109 Aufbewahrungsbox
111 Gegenfläche
113 Flanschplatte
115 Platte
117 Distanzstück
119 Magnet-Halteelemente
121 Haltebereich
123 Halte-Fläche des Effektors
125 Kontaktstift (federbelastet)
127 Schiene
129 Basisteil
131 Umkleidekabine
133 Tür der Umkleidekabine
135 Öffnung
137 Regallager
138 Längsachse
139 Lagerplatz

### Aspekte

1. Aufbewahrungsboxen-Manipulator / Manipulator (101) für Aufbewahrungsboxen (109) umfassend einen Effektor (107), wobei der Effektor (107) lösbar mit einer Schnittstelle einer Aufbewahrungsbox (109) verbindbar ist.
2. Aufbewahrungsboxen-Manipulator nach Aspekt 1, dadurch gekennzeichnet, dass der Effektor (107) mindestens ein schaltbares Magnet-Halteelement (119) umfasst, dass die Haltebereiche (121) des oder der Magnet-Halteelemente (119) eine Halte-Fläche (123) aufspannen, dass die mindestens eine Schnittstelle der Aufbewahrungsboxen (109) eine ferro-magnetische Gegenfläche (111) ist, und dass die mindestens eine Gegenfläche (111) komplementär zu der Halte-Fläche (123) des Effektors (107) geformt ist.
3. Aufbewahrungsboxen-Manipulator nach Aspekt 2, dadurch gekennzeichnet, dass die Halte-Fläche (123) des Effektors (107) und die mindestens eine Gegenfläche (111) einer Aufbewahrungsbox (109) eben sind.
4. Aufbewahrungsboxen-Manipulator nach einem der vorhergehenden Aspekte, dadurch gekennzeichnet, dass er Kontakt-Erkennungsmittel zum Erkennen eines Kontakts zwischen der Halte-Fläche (123), bzw. des oder der Halte-Bereiche (121) des Effektors (107) und einer Gegenfläche (111) einer Aufbewahrungsbox (107) umfasst.
5. Aufbewahrungsboxen-Manipulator nach Aspekt 4, dadurch gekennzeichnet, dass die Kontakt-Erkennungsmittel mindestens einen federbelasteten Kontaktstift (125) umfassen, dass der oder die federbelasteten Kontaktstifte (125) über die Halte-Fläche (123) hinausragen, wenn kein Kontakt zwischen der Halte-Fläche (123) und einer Gegenfläche (111) einer Aufbewahrungsbox (107) besteht, und dass die Enden des oder der federbelasteten Kontaktstifte (125) in der Halte-Fläche (123) liegen, wenn ein Kontakt zwischen der Haltefläche (123) eines Effektors (107) und einer ferro-magnetischen Gegenfläche (111) einer Aufbewahrungsbox (107) besteht.
6. Aufbewahrungsboxen-Manipulator nach Aspekt 5, dadurch gekennzeichnet, dass er mindestens zwei federbelastete Kontaktstifte (125) aufweist, dass zwischen zwei der Kontaktstifte (125) eine elektrische Spannung (U) anliegt, und dass ein Kontakt zwischen der Haltefläche (123) des Effektors (107) und einer ferro-magnetischen Gegenfläche (11) einer Aufbewahrungsbox (107) detektiert wird, wenn ein elektrischer Strom (I) zwischen den Kontaktstiften (125) fließt an denen eine elektrische Spannung (U) anliegt.
7. Aufbewahrungsboxen-Manipulator nach einem der vorhergehenden Aspekte, dadurch gekennzeichnet, dass jedes der Magnet-Halteelemente (119) einen oder mehrere Permanent-Magnete und mindestens einen Elektro-Magnet umfasst, und dass sich bei bestromtem Elektro-Magnet die von dem oder den Permanent-Magneten und dem mindestens einen Elektro-Magnet auf die ferromagnetische Gegenfläche (111) einer Aufbewahrungsbox (107) ausgeübten Magnet-Kräfte mindestens zu 60 % aufheben.
8. Aufbewahrungsboxen-Manipulator nach einem der vorhergehenden Aspekte, dadurch gekennzeichnet, dass der Manipulator (101) ein Knickarmroboter oder ein Industrieroboter ist.
9. Aufbewahrungsboxen-Manipulator nach einem der vorhergehenden Aspekte, dadurch gekennzeichnet, dass der Manipulator (101) verfahrbar ist.
10. Aufbewahrungsboxen-Manipulator nach Aspekt 9, dadurch gekennzeichnet, dass der Manipulator (101) auf Schienen oder auf Rädern verfahrbar ist.

## Patentansprüche

1. Aufbewahrungsboxen-Manipulator / Manipulator (101) für Aufbewahrungsboxen (109) umfassend einen Effektor (107), wobei der Effektor (107) lösbar mit einer Schnittstelle einer Aufbewahrungsbox (109) verbindbar ist, wobei der Aufbewahrungsboxen-Manipulator Kontakt-Erkennungsmittel zum Erkennen eines Kontakts zwischen der Halte-Fläche (123), bzw. des oder der Halte-Bereiche (121) des Effektors (107) und einer Gegenfläche (111) einer Aufbewahrungsbox (107) umfasst.

2. Aufbewahrungsboxen-Manipulator nach Anspruch 1, **dadurch gekennzeichnet, dass** der Effektor (107) mindestens ein schaltbares Magnet-Halteelement (119) umfasst, dass die Haltebereiche (121) des oder der Magnet-Halteelemente (119) eine Halte-Fläche (123) aufspannen, dass die mindestens eine Schnittstelle der Aufbewahrungsboxen (109) eine ferro-magnetische Gegenfläche (111) ist, und dass die mindestens eine Gegenfläche (111) komplementär zu der Halte-Fläche (123) des Effektors (107) geformt ist.

3. Aufbewahrungsboxen-Manipulator nach Anspruch 2, **dadurch gekennzeichnet, dass** die Halte-Fläche (123) des Effektors (107) und die mindestens eine Gegenfläche (111) einer Aufbewahrungsbox (109) eben sind.

4. Aufbewahrungsboxen-Manipulator nach einem der vorhergehenden Ansprüche, **dadurch gekennzeichnet, dass** die Kontakt-Erkennungsmittel mindestens einen federbelasteten Kontaktstift (125) umfassen, dass der oder die federbelasteten Kontaktstifte (125) über die Halte-Fläche (123) hinausragen, wenn kein Kontakt zwischen der Halte-Fläche (123) und einer Gegenfläche (111) einer Aufbewahrungsbox (107) besteht, und dass die Enden des oder der federbelasteten Kontaktstifte (125) in der Halte-Fläche (123) liegen, wenn ein Kontakt zwischen der Haltefläche (123) eines Effektors (107) und einer ferro-magnetischen Gegenfläche (111) einer Aufbewahrungsbox (107) besteht.

5. Aufbewahrungsboxen-Manipulator nach Anspruch 4, **dadurch gekennzeichnet, dass** er mindestens zwei federbelastete Kontaktstifte (125) aufweist, dass zwischen zwei der Kontaktstifte (125) eine elektrische Spannung (U) anliegt, und dass ein Kontakt zwischen der Haltefläche (123) des Effektors (107) und einer ferro-magnetischen Gegenfläche (11) einer Aufbewahrungsbox (107) detektiert wird, wenn ein elektrischer Strom (I) zwischen den Kontaktstiften (125) fließt an denen eine elektrische Spannung (U) anliegt.

6. Aufbewahrungsboxen-Manipulator nach einem der vorhergehenden Ansprüche, **dadurch gekennzeichnet, dass** jedes der Magnet-Halteelemente (119) einen oder mehrere Permanent-Magnete und mindestens einen Elektro-Magnet umfasst, und dass sich bei bestromtem Elektro-Magnet die von dem oder den Permanent-Magneten und dem mindestens einen Elektro-Magnet auf die ferromagnetische Gegenfläche (111) einer Aufbewahrungsbox (107) ausgeübten Magnet-Kräfte mindestens zu 60 % aufheben.

7. Aufbewahrungsboxen-Manipulator nach einem der vorhergehenden Ansprüche, **dadurch gekennzeichnet, dass** der Manipulator (101) ein Knickarmroboter oder ein Industrieroboter ist.

8. Aufbewahrungsboxen-Manipulator nach einem der vorhergehenden Ansprüche, **dadurch gekennzeichnet, dass** der Manipulator (101) verfahrbar ist.

9. Aufbewahrungsboxen-Manipulator nach Anspruch 8, **dadurch gekennzeichnet, dass** der Manipulator (101) auf Schienen oder auf Rädern verfahrbar ist.
